Europäisches Patentamt

European Patent Office

Office européen des brevets

(11) Veröffentlichungsnummer: **0 289 748 B1**

(12)

# EUROPÄISCHE PATENTSCHRIFT

(45) Veröffentlichungstag der Patentschrift: **01.07.92**

(51) Int. Cl.⁵: **B21D 51/26**

(21) Anmeldenummer: **88103964.8**

(22) Anmeldetag: **12.03.88**

(54) **Kalibrierwerkzeug für eine Maschine zum Längsnahtschweissen gerundeter Dosenzargen.**

(30) Priorität: **08.05.87 CH 1765/87**

(43) Veröffentlichungstag der Anmeldung:
**09.11.88 Patentblatt 88/45**

(45) Bekanntmachung des Hinweises auf die
Patenterteilung:
**01.07.92 Patentblatt 92/27**

(84) Benannte Vertragsstaaten:
**BE CH DE ES FR GB GR IT LI NL SE**

(56) Entgegenhaltungen:
**DE-A- 3 607 272**
**DE-B- 2 529 466**
**DE-C- 597 054**
**US-A- 3 257 055**
**US-A- 4 299 108**

(73) Patentinhaber: **ELPATRONIC AG**
**Baarerstrasse 112**
**CH-6300 Zug(CH)**

(72) Erfinder: **Meier, Paul**
**Gyrenstrasse 11d**
**CH-8967 Widen(CH)**

## Beschreibung

Die Erfindung betrifft ein Kalibrierwerkzeug für eine Maschine zum Längsnahtschweißen gerundeter Dosenzargen nach dem Oberbegriff des Patentanspruchs 1.

Solche Kalibrierwerkzeuge haben die Aufgabe, mit ihrem starren Rollenkranz den gerundeten Dosenzargen, die nacheinander durch die Schweißebene hindurchbewegt werden, eine Form aufzuzwingen, bei der die Zargenlängsränder eine bestimmte, von der Art der vorgesehenen Schweißung abhängige Lage zueinander genau einhalten. Wenn beispielsweise eine Quetschnaht geschweißt werden soll, sollen die Zargenlängsränder einander um einen genau festgelegten Betrag in der Größenordnung der 2,5-fachen Blechdicke überlappen; wenn hingegen eine Stumpfnaht geschweißt werden soll, ist es entscheidend, daß die Schnittkanten an den Zargenlängsrändern lückenlos und mit einem bestimmten Druck aneinanderliegen. In jedem Fall ist der starre Rollenkranz des Kalibrierwerkzeugs - und nicht etwa eine förderstromaufwärts von diesem starren Rollenkranz angeordnete, möglicherweise gefederte, Führungsvorrichtung - für die genaue Lagezuordnung der Zargenlängsränder im Arbeitsbereich der Schweißvorrichtung verantwortlich. Deshalb hat der starre Rollenkranz des Kalibrierwerkzeugs auch entscheidenden Einfluß auf die Qualität der entstehenden Schweißnaht und der geschweißten Dosenzargen insgesamt.

Bei bekannten Kalibrierwerkzeugen der genannten Gattung (siehe z.B. Betriebsanleitung der Soudronic AG, CH-8962 Bergdietikon, für Dosenschweißmaschinen des Typs FBB, Seite 337/A) ist der Rollenträger ein in sich geschlossener, starrer Rahmen, an dem die Kalibrierrollen auf je einem Exzenterzapfen gelagert sind. Durch Drehen der Exzenterzapfen lassen sich die Kalibrierrollen derart einstellen, daß ein für Dosenzargen eines bestimmten Nenndurchmessers vorgesehenes Kalibrierwerkzeug in gewissen Grenzen an unterschiedliche Blechdicken und Überlappungsbreiten der Dosenzargen angepaßt werden kann. Als Hilfsmittel für das Einstellen der Kalibrierrollen ist für jede Blechdicke und Überlappungsbreite ein besonderer, genau geschliffener Einstelldorn erforderlich, dessen Durchmesser dem Durchmesser der herzustellenden Dosenzargen entspricht. Die einzelnen Kalibrierrollen werden durch Drehen ihrer Exzenterzapfen in eine Stellung gebracht, in der sie spielfrei an dem genau zentrisch angeordneten Einstelldorn anliegen. Anschließend werden die Exzenterzapfen festgeklemmt, damit sie sich nicht mehr verstellen können. Stellt sich dann bei ersten Schweißversuchen heraus, daß die Zargenlängsränder nicht genau die vorgesehene Lage in bezug zueinander einnehmen, sich beispielswiese zu stark überlappen, dann muß entweder die gesamte, zeitraubende Einstellprozedur mit sämtlichen Kalibrierrollen unter Verwendung eines entsprechend geänderten Einstelldorns wiederholt werden oder es wird der Einfachheit halber versucht, nur einzelne Kalibrierrollen nachzustellen. Letzteres hat aber, vor allem wenn Dosenblech von besonders geringer Dicke verarbeitet werden soll, meist die Folge, daß an den Dozenzargen Längsmarkierung entstehen, weil einzelne Kalibrierrollen gegenüber den übrigen Kalibrierrollen im starren Rollenkranz unzulässig weit radial nach innen verstellt sind.

Bei einer bekannten Walzeinrichtung zum kontinuierlichen Formen von Rohren aus Metallband (US-A-4 299 108) ist ein Kalibrierwerkzeug mit zwei Halbrahmen vorgesehen. Auf jedem dieser beiden Halbrahmen befindet sich eine starr gelagerte und eine schwenkbar gelagerte Rolle. Eine weitere Rolle ist getrennt von den beiden Halbrahmen einstellbar gelagert. Zur Anpassung dieser Rollen an unterschiedliche Blechdicken und Rohrabmessungen müssen einerseits die beiden Halbrahmen je mittels eines Stellgetriebes eingestellt werden, wobei sich die beiden Halbrahmen auf einer gemeinsamen Führung verschieben lassen. Ausserdem müssen die schwenkbar auf den Halbrahmen gelagerten Rollen mit Hilfe von Stellschrauben einzeln eigestellt werden. Schliesslich muss auch noch die ortsfeste Rolle in die erforderliche Lage gebracht werden.

Der Erfindung liegt deshalb die Aufgabe zugrunde, ein Kalibrierwerkzeug für eine Maschine zum Längsnahtschweißen gerundeter Dosenzargen derart weiterzubilden, daß der starre Rollenkranz mit geringerem Arbeitsaufwand als bisher an unterschiedliche Blechdicken und Nahtgestaltungen der Dosenzargen angepaßt werden kann.

Die Aufgabe ist erfindungsgemäß ausgehend von einem Kalibrierwerkzeug der eingangs beschriebenen Gattung durch die Merkmale des kennzeichnenden Teils des Patentanspruchs 1 gelöst.

Bei dem erfindungsgemäßen Kalibrierwerkzeug lassen sich die Kalibrierrollen an jedem der beiden Halbrahmen ein für alle Mal so einstellen, daß sie ein Kreisbogenstück, vorzugsweise einen Halbkreis, umschreiben. In einer bestimmten Sollstellung der beiden Halbrahmen in bezug zueinander, umschreiben dann die an ihnen gelagerten Kalibrierrollen in ihrer Gesamtheit einen genauen Kreis, dessen Durchmesser mit dem Sollaußendurchmesser der zu schweißenden Dosenzargen übereinstimmt.

Wenn sich nun herausstellt, daß die miteinander zu verschweißenden Längsränder der Zargen nicht genau in der vorgesehenen Weise auf- oder aneinanderliegen, kann die erforderliche Korrektur einfach dadurch ausgeführt werden, daß mindestens einer der beiden Halbrahmen mittels des ihm zugeordneten Stelltriebes in bezug auf die Brücke verstellt wird. Die Kreisbogen, vorzugsweise Halbkreise, die von den Kalibrierrollen an jedem der beiden Halbrahmen umschrieben werden, ändern sich durch diese Verstellung nicht. Die Gesamtheit sämtlicher Kalibrierrollen an beiden Halbrahmen umschreibt zwar nun nicht mehr einen genauen Kreis, sondern ein Oval oder ein ähnliches Gebilde. Es hat sich aber herausgestellt, daß eine solche Abweichung von der genauen Kreisform ohne schädlichen Einfluß auf das Erscheinungsbild der geschweißten Dosenzargen bleibt, wenn die Verstellung der Halbrahmen in bezug zueinander, je nach Nenndurchmesser der Dosenzargen, die Größenordnung von etwa 0,5 bis 2 mm nicht überschreitet.

Ein solcher Einstellbereich genügt, um für sämtliche Dosen eines und desselben Nenndurchmessers ein- und dasselbe Paar Halbrahmen mit festeingestellten Kalibrierrollen zu verwenden, unabhängig davon, ob und gegebenenfalls in welchem Maß die Zargenlängsränder sich beim Schweißen überlappen sollen, und ferner unabhängig davon, ob für die Dosenzargen, innerhalb der Grenzen des Üblichen, dickeres oder dünneres und somit steiferes oder weniger steifes Blech verwendet wird. Zum Herstellen von Dosen eines bestimmten Nenndurchmessers ist deshalb nur ein einziger Einstelldorn erforderlich, mit dessen Hilfe die Kalibrierrollen an den Halbrahmen ein für alle Mal eingestellt werden.

Das erfindungsgemäße Kalibrierwerkzeug ist vorzugweise dadurch weitergebildet, daß

- an der Brücke zwei miteinander fluchtende Führungen ausgebildet sind, an denen je ein Querschlitten geführt und starr festklemmbar ist, und
- die beiden Halbrahmen an je einem der Querschlitten auswechselbar befestigt sind.

Damit wird erreicht, daß zum Herstellen von Dosenzargen unterschiedlicher Nenndurchmessers nicht mehr, wie bisher, das Kalibrierwerkzeug insgesamt ausgewechselt werden muß, sondern nur noch das Paar Halbrahmen mit daran fest gelagerten, dem Nenndurchmesser der herzustellenden Dosen angepaßten Kalibrierrollen. Jeder der beiden Halbrahmen mit zugehörigen Kalibrierrollen hat ein sehr viel geringeres Gewicht als ein für Dosenzargen des gleichen Nenndurchmessers vorgesehenes bekanntes Kalibrierwerkzeug. Dadurch wird die Anpassung an Dosenzargen unterschiedlicher Nenndurchmessers wesentlich erleichtert.

Bei der im vorstehenden beschriebenen Weiterbildung der Erfindung ist es ferner vorteilhaft, daß

- an jedem der beiden Halbrahmen mehrere Kalibrierrollen symmetrisch in bezug auf eine zur Kalibrierebene normale, die Zargenlängsachse enthaltende Diametralebene angeordnet sind, und
- die Führungen sich parallel zu dieser Diametralebene erstrecken.

Vorzugsweise ist jedem der beiden Halbrahmen ein Stelltrieb mit Gewindespindel zugeordnet.

An jedem der beiden Halbrahmen kann ein Vorsatzteil befestigt sein, an dem mindestens eine Vorkalibrierrolle gelagert ist.

Schließlich ist es vorteilhaft, wenn die Brücke parallel zur Zargenlängsachse einstellbar an einem Maschinenbett geführt ist.

Ein Ausführungsbeispiel der Erfindung wird im folgenden anhand schematischer Zeichnungen mit weiteren Einzelheiten beschrieben. Es zeigt:

Fig. 1     eine Schrägansicht einer Maschine zum Längsnahtschweißen gerundeter Dosenzargen,

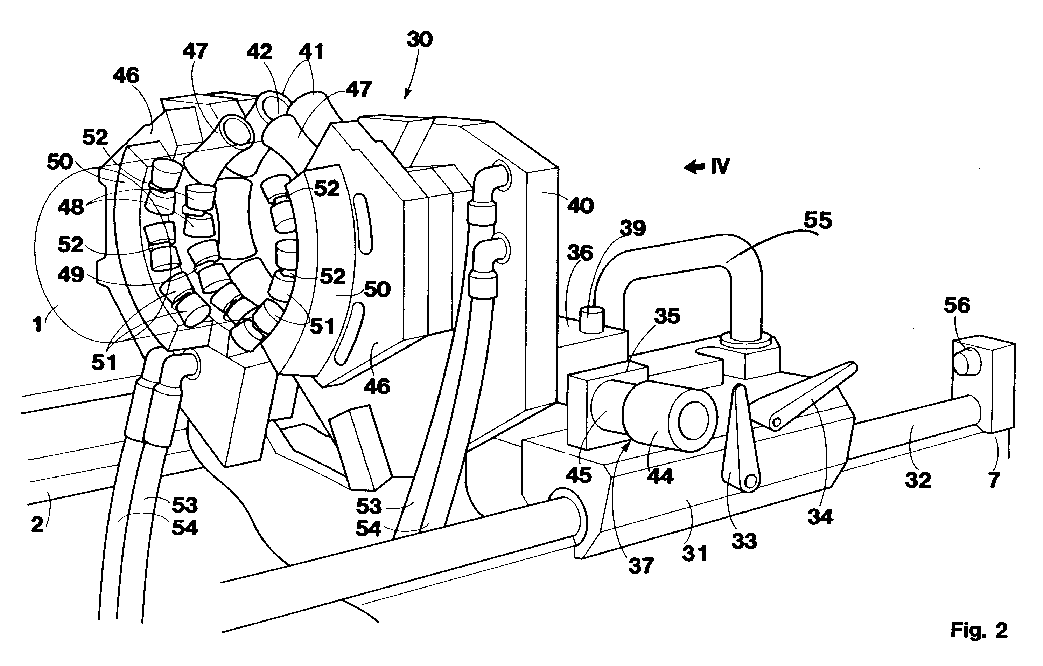

Fig. 2     eine vergrößerte Teilansicht in Richtung des Pfeils II in Fig. 1,

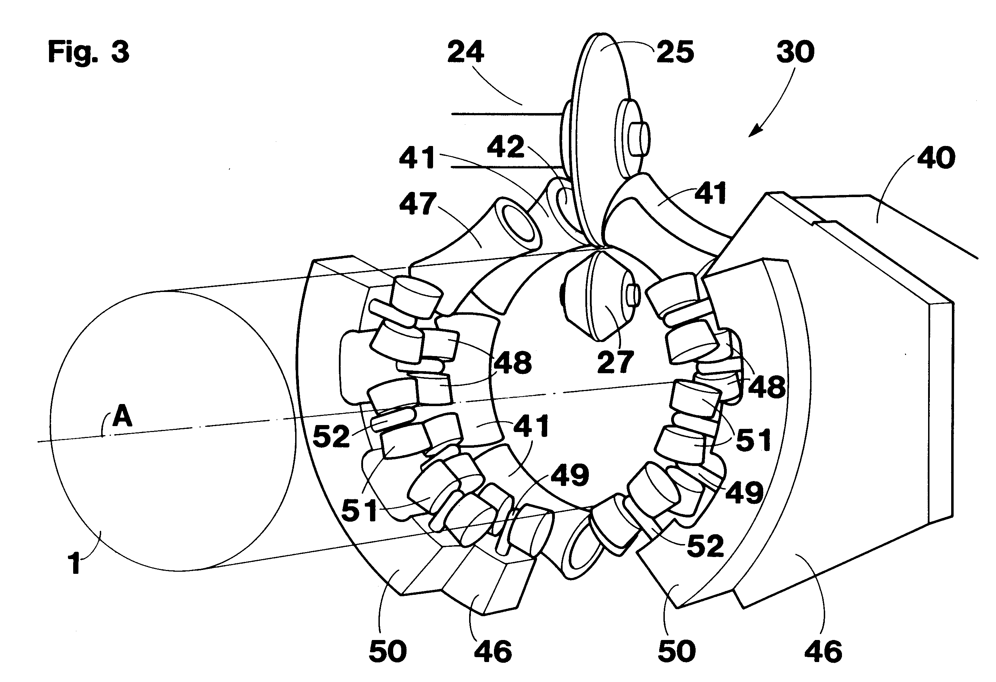

Fig. 3     eine weiter vergrößerte Teilansicht mit ähnlicher Blickrichtung wie in Fig. 2,

Fig. 4     eine Teilseitenansicht in Richtung des Pfeils IV in Fig. 2 und

Fig. 5     eine Teildraufsicht in Richtung des Pfeils V in Fig. 4.

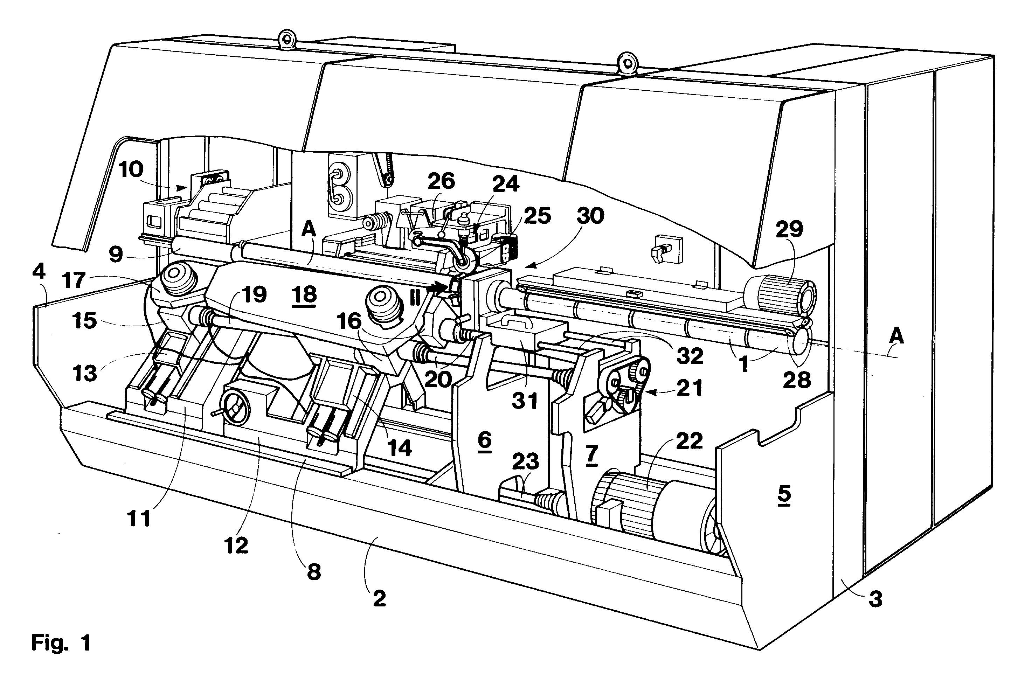

Die dargestellte Maschine dient dem Zweck, aus ebenen, rechteckigen Blechzuschnitten Dosenzargen 1 zu rollen und deren Längsränder miteinander zu verschweißen. Tragende Bauteile der Maschine sind ein langgestrecktes Maschinenbett 2 und ein daran befestigter, ebenfalls langgestreckter senkrechter Rahmen 3. Das Maschinenbett 2 hat eine hintere Stirnwand 4 und eine vordere Stirnwand 5 sowie, parallel dazu, eine hintere Zwischenwand 6 und eine vordere Zwischenwand 7. Zwischen der hinteren Stirnwand 4 und der hinteren Zwischenwand 6 sind auf dem Maschinenbett 2 längsgerichtete Führungen 8 ausgebildet. Oberhalb der Führungen 8 und parallel dazu ist ein Arm 9 angeordnet, der im Bereich seines hinteren, in Fig. 1 linken Endes am Rahmen 3 befestigt ist und sich von dort aus in Richtung einer waagerechten Achse, die im folgenden als Zargenlängsachse A bezeichnet wird, erstreckt.

Neben dem hinteren Ende des Arms 9 ist eine Rundvorrichtung 10 üblicher Bauart angeordnet, die bei jedem Arbeitszyklus der Maschine eine Dosenzarge 1 um den Arm herum rundet. Unterhalb des Arms 9 sind auf den Führungen 8 ein hinteres Gestell 11 und ein vorderes Gestell 12 parallel zur Zargenlängsachse A einstellbar angeordnet. Jedes der beiden Gestelle 11 und 12 hat die Form eines Satteldachs, das einen Teil des Maschinenbetts 2 überdeckt, und trägt ein Paar Schlitten 13 bzw. 14, die radial zur Zargenlängsachse A einstellbar sind. Jeder der insgesamt vier Schlitten 13 und 14 weist ein Getriebe 15 bzw. 16 auf, an dem eine Fördervorrichtung 17 bzw. 18 auswechselbar befestigt ist. Jedes Paar Fördervorrichtungen 17 bzw. 18 ist symmetrisch zu einer senkrechten Ebene angeordnet, welche die Zargenlängsachse A enthält.

Die beiden Fördervorrichtungen 17 haben die Aufgabe, gemeinsam bei jedem Arbeitszyklus der Maschine eine gerundete Dosenzarge 1 von der Rundvorrichtung 10 weg in Richtung der Zargenlängsachse A vorwärts, in Fig. 1 also nach rechts, zu fördern und sie an die beiden Fördervorrichtungen 18 zu übergeben, welche die Dosenzarge dann in einer stetigen Bewegung weiter vorwärts fördern.

Die beiden Fördervorrichtungen 17 werden von je einer Gelenkwelle 19 angetrieben, die das zugehörige Getriebe 15 mit dem benachbarten Getriebe 16 verbindet. Jedes der beiden Getriebe 16 ist durch eine weitere Gelenkwelle 20 mit einem Verzweigungsgetriebe 21 verbunden, das an der vorderen Stirnwand 5 angeordnet und von einem Motor 22 antreibbar ist. Von demselben Motor 22 ist über eine wietere Gelenkwelle 23 auch die Rundvorrichtung 10 antreibbar, so daß diese mit den Fördervorrichtungen 17 synchronisiert ist.

In geringem Abstand vor den beiden Fördervorrichtungen 18 ist eine Schweißvorrichtung 24 angeordnet; zu dieser gehört eine obere Elektrodenrolle 25, die an einem Hebel 26 gelagert ist und eine untere Elektrodenrolle 27, die am Arm 9 gelagert ist. Die Achsen der beiden Elektrodenrollen 25 und 27 liegen zumindest annähernd in einer gemeinsamen senkrechten Ebene, die sich im rechten Winkel zur Zargenlängsachse A erstreckt und im folgenden als Schweißebene B bezeichnet wird. Über die Elektrodenrollen 25 und 27 ist in üblicher Weise ein Elektrodendraht geführt, der angetrieben ist und jede einzelne von den Fördervorrichtungen 18 herangeführte Dosenzarge 1 mitnimmt und sie durch ein Kalibrierwerkzeug 30 hindurchbewegt.

Das Kalibrierwerkzeug 30 hat eine Brücke 31, die auf einem Paar Führungsstangen 32 einstellbar und mittels eines Klemmhebels 33 festklemmbar ist. Die beiden Führungsstangen 32 erstrecken sich parallel zur Zargenlängsachse A und verbinden die beiden Zwischenwände 6 und 7 miteinander. Auf der Brücke 31 ist, höheneinstellbar und mittels eines weiteren Klemmhebels 34 feststellbar, ein Paar waagerechte Führungen 35 angeordnet, die sich im rechten Winkel zur Zargenlängsachse A, also mindestens annähernd parallel zu den Drehachsen der Elektrodenrollen 25 und 27, erstrecken und miteinander fluchten.

Auf jeder der beiden Führungen 35 ist ein Querschlitten 36 geführt und mittels eines Stelltriebes 37 einstellbar. Die beiden Stelltriebe 37 sind im dargestellten Beispiel getrennte Gewindespindeln, so daß jeder der beiden Querschlitten 36 unabhängig von dem anderen auf der zugehörigen Führung 35 einstellbar ist. Als Alternative zu der dargestellten Gestaltung können die beiden Stelltriebe 37 von einem rechtsgängigen bzw. linksgängigen Gewindeabschnitt einer und derselben Gewindespindel gebildet sein, so daß die beiden Querschlitten 36 stets gemeinsam und um gleiche Beträge, jedoch gegensinnig, verstellbar sind.

In jedem Fall ist dafür gesorgt, daß die Einstellung der Querschlitten 36 von Gewindespiel unabhängig bleibt; zu diesem Zweck ist beim dargestellten Ausführungsbeispiel jedem der beiden Stelltriebe 37 eine vorgespannte Feder 38 zugeordnet. Unabhängig davon, daß jeder der beiden Querschlitten 36 somit schon über seinen Stelltrieb 37 in einer bestimmten Stellung gehalten ist, läßt sich jeder Querschlitten 36 in jeder gewählten Stellung auf der zugehörigen Führung 35 mittels einer Klemmschraube 39 derart festklemmen, daß er mit der Brücke 31 eine starre Einheit bildet.

An jedem der beiden Querschlitten 36 ist ein Halbrahmen 40 starr, jedoch auswechselbar, befestigt. Die beiden Halbrahmen 40 definieren gemeinsam eine zur Zargenlängsachse A normale, also senkrechte und zu den Führungen 35 parallele, Kalibrierebene C. An jedem der beiden Halbrahmen 40 sind drei Kalibrierrollen 41 symmetrisch in bezug auf eine die Zargenlängsachse A enthaltende, waagerechte Diametralebene D auf je einem Lagerzapfen 42 gelagert. Sämtliche Lagerzapfen 42 sind derart angeordnet, daß die durch sie festgelegten Rollenachsen E der Kalibrierrollen 41 in der Kalibrierebene C liegen. Die Brücke 31 ist auf den Führungsstangen 32 derart eingestellt und festgeklemmt, daß die Kalibrierebene C mit der Schweißene B entweder zusammenfällt oder um einen kleinen Betrag in der Größenordnung von etwa 0,5 bis 2 mm förderstromaufwärts, also in Fig. 1 links von der Schweißebene B, angeordnet ist.

Die Kalibrierrollen 41 haben konkave, kreisbogenförmige Mantellinien, deren Krümmungsradius mit dem halben Außendurchmesser der zu schweißenden Dosenzargen 1 übereinstimmt. Die in der Kalibrierebene C liegenden, der Zargenlängsachse A zugewandten Mantellinien der Kalibrierrollen 41 an jedem der beiden Halbrahmen 40 haben einen gemeinsamen Krümmungsmittelpunkt F. Die beiden Querschlitten 36 werden nach Möglichkeit so eingestellt, daß die Krümmungsmittelpunkte F der ihnen zugeordneten Kalibrierrollen 41 zusammenfallen und auf der Zargenlängsachse A liegen.

Gewisse Abweichungen der Krümmungsmittelpunkte F von der Zargenlängsachse A können jedoch zugelassen werden. Hiervon wird Gebrauch gemacht, wenn es erforderlich wird, das Kalibrierwerkzeug 30 an Besonderheiten der herzustellenden Dosenzargen 1 im Rahmen eines bestimmten Nenndurchmessers anzupassen, insbesondere um bestimmte Anlageverhältnisse zwischen den miteinander zu verschweißenden Zargenlängsrändern zu gewährleisten.

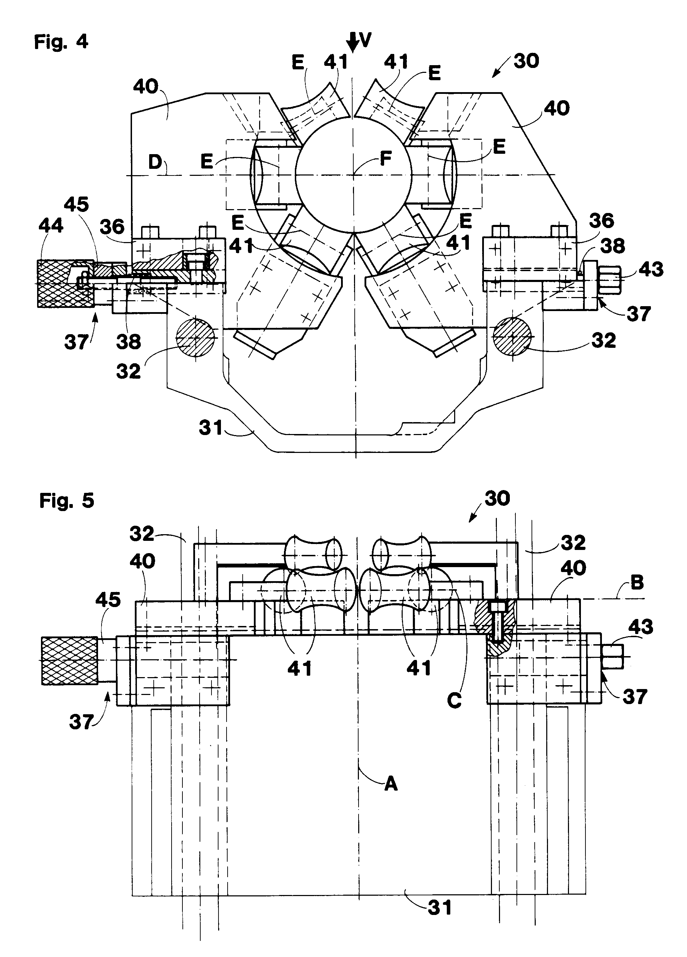

Im dargestellten Beispiel ist vorgesehen, daß der in Fig. 4 und 5 rechte Stelltrieb 37 für eine Grobeinstellung des zugehörigen Querschlittens 36 mittels eines Sechskantkopfes 43 betätigt und dann mittels der zugehörigen Klemmschraube 39 festgeklemmt wird, und dann eine Feineinstellung an dem anderen Querschlitten 36 mittels eines Drehknopfes 44 durchgeführt wird, dem in der Art einer Mikrometerschraube ein Skalenring 45 zugeordnet ist.

Förderstromaufwärts von der Kalibrierebene C können am Kalibrierwerkzeug 30 Vorrichtungen angeordnet sein, die das Einlaufen der Dosenzargen 1 in den starren Kranz der Kalibrierrollen 41 erleichtern. Solche Vorrichtungen können mit den Halbrahmen 40 verbunden und gemeinsam mit diesen auswechselbar sein. Im dargestellten Beispiel ist an jedem der Halbrahmen 40 ein plattenförmiges erstes Vorsatzteil 46 befestigt, an dem Vorkalibrierrollen 47 gelagert sind, und außerdem Führungsrollen 48, die paarweise an je einem Lagerbock 49 angeordnet sind.

Ferner ist an jedem der beiden Halbrahmen 40, förderstromaufwärts vom zugehörigen ersten Vorsatzteil 46, ein ebenfalls plattenförmiges zweites Vorsatzteil 50 befestigt, an dem weitere Führungsrollen 51, ebenfalls paarweise an je einem Lagerbock 52, gelagert sind. Die Lagerböcke 49 und 52 können an dem zugehörigen Vorsatzteil 46 bzw. 50 radial federnd abgestützt sein, da sie für die Genauigkeit der Kalibrierung der Dosenzargen nicht verantwortlich sind.

An die Halbrahmen 40 sind Schläuche 53 und 54 zum Zu- und Abführen von Kühlwasser angeschlossen, damit die Halbrahmen sich trotz ihrer Anordnung in oder sehr nahe der Schweißebene B nicht übermäßig erhitzen.

An der Brücke 31 ist ein Handgriff 55 befestigt, der es erleichtert, das gesamte Kalibrierwerkzeug 30 aus seiner abgebildeten Arbeitsstellung förderstromabwärts gegen einen Anschlag 56 zu verschieben, beispielsweise, damit die Halbrahmen 40 ausgewechselt werden können.

**Patentansprüche**

1. Kalibrierwerkzeug für eine Maschine zum Längsschweissen gerundeter Dosenzargen, mit
   - einem rahmenartigen Rollenträger, der eine zur Zargenlängsachse (A) normale Kalibrierebene (C) definiert, und einer Schweissvorrichtung (24), welche eine zur Zargenlängsachse (A) normale Schweissebene (B) definiert, wobei Kalibrierebene (C) und Schweissebene (B) mindestens annähernd übereinstimmen,
   ferner mit
   - mehreren Kalibrierrollen (41), die um je eine in der Kalibrierebene (C) liegende Rollenachse (E) drehbar am Rollenträger gelagert sind und einen Rollenkranz bilden, durch den die Dosenzargen (1) hindurch bewegbar sind, und mit
   - Vorrichtungen (37) zum Einstellen der Kalibrierrollen (41) in der Kalibrierebene (C),
   dadurch **gekennzeichnet,**
   - dass die Kalibrierrollen (41), auf zwei Halbrahmen (40) verteilt, an diesen starr gelagert sind und je mit den Halbrahmen (40) zwei halbe, starre Rollenkränze bilden,
   - dass die beiden halben, starren Rollenkränze auf einer gemeinsamen Brücke (31) angeordnet sind,
   - und dass mindestens einer der beiden starren, halben Rollenkränze zum Einstellen ihrer relativen Lage zueinander durch einen Stelltrieb (37) auf der Brücke (31) verschiebbar ist,
   - derart, dass die beiden halben, starren Rollenkränze zusammen einen ganzen, einstellbaren Rollenkranz bilden.

2. Kalibrierwerkzeug nach Anspruch 1, dadurch **gekennzeichnet,** daß
   - an der Brücke (31) zwei miteinander fluchtende Führungen (35) ausgebildet sind, an denen je ein Querschlitten (36) geführt und starr festklemmbar ist, und
   - die beiden Halbrahmen (40) an je einem der Querschlitten (36) auswechselbar befestigt sind.

3. Kalibrierwerkzeug nach Anspruch 2, dadurch **gekennzeichnet,** daß
   - an jedem der beiden Halbrahmen (40) mehrere Kalibrierrollen (41) symmetrisch in bezug auf eine zur Kalibrierebene (C) normale, die Zargenlängsachse (A) enthaltende Diametralebene (D) angeordnet sind, und
   - die Führungen (35) sich parallel zu dieser Diametralebene (D) erstrecken.

4. Kalibrierwerkzeug nach einem der Ansprüch 1 bis 3,
   dadurch **gekennzeichnet,** daß jedem der beiden Halbrahmen (40) ein Stelltrieb (37) mit Gewindespindel zugeordnet ist.

5. Kalibrierwerkzeug nach einem der Ansprüche 1 bis 4,
   dadurch **gekennzeichnet,** daß an jedem der beiden Halbrahmen (40) ein Vorsatzteil (46) befestigt ist, an dem mindestens eine Vorkalibrierrolle (47) gelagert ist.

6. Kalibrierwerkzeug nach einem der Ansprüche 1 bis 5,
dadurch **gekennzeichnet,** daß die Brücke (31) parallel zur Zargenlängsachse (A) einstellbar an einem Maschinenbett (2) geführt ist.

**Claims**

1. Electrode wire for a roller seam-welding machine having at least one roller electrode (12) and a guide groove (22) provided in its circumference to receive the electrode wire (20), of which the front (26) which is to face the work being welded (16') is dome-shaped in cross-section and of which the back (28, 28') which is to be received in the guide groove (22, 22') of the roller electrode (12) is preferably V-shaped or round in cross-section,
characterised in that in the longitudinal direction of the wire in the transition region between the front and the back (26; 28, 28') there are additionally formed two flanges (30, 31), to support the electrode wire (20) on the circumference of the roller electrode (12) on both sides of the guide groove (22, 22'), the front (26) inclusive of the front (30a, 31a) of the flanges (30, 31) having a common radius of curvature (R), which is chosen so that even during welding the outer longitudinal edges (30b, 31b) of the flanges (30, 31) do not touch the surface of the work being welded (16').

2. Electrode wire according to claim 1, characterised in that the contact area between the roller electrode (12) and the flanges (30, 31) amounts to 30 - 50% of the contact area between the roller electrode (12) and the back (28, 28') received in the guide groove (22, 22').

3. Electrode according to claim 1, characterised in that the contact area between the roller electrode (12) and the flanges (30, 31) amounts to 40% of the contact area between the roller electrode (12) and the back (28, 28') received in the guide groove (22, 22').

4. Electrode wire according to any one of claims 1 to 3, characterised in that the finish-profiled electrode wire (20) is 25 - 60% longer than the round wire used for its production.

5. Electrode wire according to claim 4, characterised in that the elongation of the finish-profiled electrode wire (20) is 35%.

6. Electrode wire according to any one of claims 1 to 5, characterised in that the back (28, 28') which is to be received in the guide groove (22, 22') bends at an angle into the back of the flanges (30, 31) of the electrode wire (20).

**Revendications**

1. Outil de calibrage d'une machine pour la soudure longitudinale de corps de boîtes arrondis, comportant
   - un élément porte-rouleaux en forme de cadre, qui définit un plan (C) de calibrage perpendiculaire à l'axe longitudinal (A) des corps de boîtes, et un dispositif (24) de soudage définissant un plan (B) de soudage qui est perpendiculaire à l'axe longitudinal (A) des corps de boîtes, le plan (C) de calibrage et le plan (B) de soudage coïncidant au moins approximativement, et comportant en outre
   - plusieurs rouleaux (41) de calibrage logés chacun de façon à pouvoir tourner sur un axe (E) de rouleau situé dans le plan (C) de calibrage, dans l'élément porte-rouleaux, ces rouleaux formant une couronne de rouleaux à travers laquelle les corps (1) de boîtes peuvent être déplacés, et comportant
   - des dispositifs (37) permettant le réglage des rouleaux (41) de calibrage dans le plan (C) de calibrage,
   caractérisé en ce que
   - les rouleaux (41) de calibrage, répartis sur deux demi-cadres (40), sont logés de façon rigide sur ces derniers et forment avec les demi-cadres (40) deux demi-couronnes rigides de rouleaux,
   - en ce que les deux demi-couronnes rigides de rouleaux sont disposées sur une traverse commune (31),
   - et en ce que l'une au moins des deux demi-couronnes rigides de rouleaux peut être déplacée sur la traverse (31), par l'intermédiaire d'un mécanisme (37) de réglage, pour permettre l'ajustement de la position relative des demi-couronnes l'une par rapport à l'autre,
   - de telle façon que les deux demi-couronnes rigides de rouleaux forment ensemble une couronne de rouleaux complète réglable.

2. Outil de calibrage selon la revendication 1, caractérisé en ce que
   - deux guidages (35), alignés l'un sur l'autre, sont réalisés sur la traverse (31), sur lesquels un chariot transversal (36) respectivement est guidé et peut être serré, et en ce que

- les deux demi-cadres (40) sont fixés respectivement, de façon démontable, sur l'un des deux chariots transversaux (36).

3. Outil de calibrage selon la revendication 2, caractérisé en ce que
- plusieurs rouleaux (41) de calibrage sont disposés dans chacun des deux demi-cadres (40), de façon symétrique par rapport à un plan diamétral (D) qui est perpendiculaire au plan (C) de calibrage et contient l'axe longitudinal (A) des corps de boîtes, et en ce que
- les guidages (35) s'étendent parallèlement à ce plan diamétral (D).

4. Outil de calibrage selon l'une des revendications 1 à 3, caractérisé en ce qu'un mécanisme (37) de réglage doté d'une broche filetée est associé à chacun des deux demi-cadres (40).

5. Outil de calibrage selon l'une des revendications 1 à 4, caractérisé en ce qu'un élément rapporté (46) est fixé sur chacun des deux demi-cadres (40), un rouleau (47) de précalibrage au moins étant logé dans cet élément rapporté.

6. Outil de calibrage selon l'une des revendications 1 à 5, caractérisé en ce que la traverse (31) est guidée sur un bâti (2) de la machine de façon à pouvoir être ajustée parallèlement à l'axe longitudinal (A) des corps de boîtes.

**Fig. 1**

Fig. 2

# Fig. 3

**Fig. 4**

**Fig. 5**